# EUROPÄISCHE PATENTSCHRIFT

(11) **EP 1 198 737 B1**
(45) Veröffentlichungstag und Bekanntmachung des Hinweises auf die Patenterteilung: **10.03.2004**
(21) Anmeldenummer: 00949130.9
(22) Anmeldetag: 26.06.2000
(51) Int. Cl.: G05B 19/042, G05B 19/409

(54) **VISUALIZATION SYSTEM FOR TECHNICAL PROCESS DATA**
VISUALISIERUNGSSYSTEM FÜR TECHNISCHE PROZESSDATEN
SYSTEME DE VISUALISATION POUR DONNEES TECHNIQUES DE PROCESSUS

(30) Priorität: 30.07.1999 DE 29913057 U
(43) Veröffentlichungstag der Anmeldung: 24.04.2002
(73) Patentinhaber: SIEMENS AKTIENGESELLSCHAFT, 80333 München (DE)
(72) Erfinder: SCHMIDT, Gerhard, D-92318 Neumarkt (DE)
(86) Internationale Anmeldenummer: PCT/DE2000/002070
(87) Internationale Veröffentlichungsnummer: WO 2001/009692

(56) Entgegenhaltungen:
- US-A- 5 200 744
- US-A- 5 386 360
- US-A- 5 706 455
- US-A- 5 726 912
- US-A- 5 752 039
- US-A- 5 903 455
- HAMMERL A: "PROTOOL - COST-CUTTING CONFIGURATION SOFTWARE FOR ALL COROS OPERATOR PANELS" , ENGINEERING AND AUTOMATION,DE,SIEMENS AKTIENGESELLSCHAFT, BERLIN, VOL. 18, NR. 3/04, PAGE(S) 6-7 XP000643814 ISSN: 0939-2068 das ganze Dokument

## Beschreibung

Technische Prozesse und Anlagen aller Art, wie etwa technische Fertigungsprozesse, z.B. Schweißanlagen in der Automobilindustrie, oder technische Verarbeitungsprozesse, z.B. Raffinerien in der Erdöl verarbeitenden Industrie, werden mit Hilfe von digitalen Rechneranlagen gesteuert. Dabei sind neben den zur eigentlichen Steuerung des jeweiligen Prozesses dienenden industriellen Steuerungseinheiten vielfach auch zusätzliche datenverarbeitende Einheiten vorhanden, die vorrangig zur Anzeige und/oder Vorgabe von Prozeßdaten dienen. Derartige industrielle Bedien- und Beobachtungseinheiten, welche teilweise auch als sogenannte Operator Panels bezeichnet werden, sind eigenständige Datenverarbeitungseinheiten. Diese sind mit der zur Prozeßsteuerung dienenden industriellen Steuerungseinheit verbunden und ermöglichen eine Ausgabe und/oder Vorgabe von Prozeßdaten, der Steuerungseinheit meist in sehr übersichtlicher graphischer Form.

Aus dem Dokument US 5,200,744 eine Vorrichtung zur interaktiven Bedienung einer technischen Anlage bekannt. Zur Bedienung sind Kombinationen aus einem Anzeigeelement und einer interaktiven Eingabeeinheit, z.B. einem berührungssensitiven Schirm vorhanden.

Aus dem Dokument US 5,903,455 eine Vorrichtung zur Steuerung von Schnittstellen in einem System zur Verwaltung von Feldgeräten bekannt. Hiermit wird automatisch die Kommunikation zwischen einem Feldgerät, einer zentralen Datenschnittstelle und einem Benutzer ermöglicht.

Aus dem Dokument US 5,752,039 ist ein System bekannt, womit Änderungen an ausführbaren Dateien ermittelt und gespeichert werden können. Hierzu werden bei einer alten und einer neuen Ausführung einer ausführbaren Datei einerseits die Inhalte der Dateiköpfe und andererseits die Inhalte eines jeden Dateiteilbereiches miteinander verglichen.

Hierzu werden in aller Regel die Art der Anzeige und die zur Verfügung stehenden Anzeige- und Eingabemittel, wie z.B. ein sogenannter Touch Screen, Tastaturen, programmierbare Steuertasten und vieles mehr abhängig von der Art des dazugehörigen technischen Prozesses anwendungsabhängig programmiert. Bei dieser Programmierung muß insbesondere berücksichtigt werden, welche Meßwerte von den im technischen Prozeß verteilten Meßgebern bereitgestellt werden und welche Steuerwerte von der industriellen Bedien- und Beobachtungseinheit an die im technischen Prozeß verteilten Stellglieder bereitgestellt werden müssen.

Da einerseits die Programmierung industrieller Bedien- und Beobachtungseinheiten aufwendig ist, und andererseits die Bedien- und Beobachtungseinheiten in einer industriellen Anlage nicht zur Programmierung zur Verfügung stehen, sondern für Führung der Anlage benötigt werden, gibt es spezielle Projektierungseinheiten. Hiermit kann quasi off-line ein Projektierungsdatensatz generiert werden, der auf die Architektur und die Besonderheiten des jeweiligen technischen Prozesses zugeschnitten ist. Ferner können bei der Projektierung auch besondere Wünsche des Betreibers der Anlage bezüglich deren Bedien- und Beobachtbarkeit berücksichtigt werden. Wird ein Projektierungsdatensatz nach dessen Fertigstellung in eine Bedien- und Beobachtungseinheit geladen, so ist eine optimale, individualisierte Bedienerführung eines technischen Prozesses bzw. der Anlage und zusätzlicher Steuerungs- und Regelungskomponenten möglich.

Vielfach ist ein Projektierungsdatensatz relativ umfangreich, da einerseits eine Fülle von insbesondere graphischen Darstellungen und datentechnischen Verknüpfungen zwischen dem technischen Prozeß und einer industriellen Steuerungseinheit, bzw. zwischen dem technischen Prozeß und einer industriellen Bedien- und Beobachtungseinheit andererseits berücksichtigt werden müssen. Andererseits tritt insbesondere in Phase der Erstellung eines Projektierungsdatensatzes häufig der Fall auf, daß u.U. nur geringfügige Anpassungen vorgenommen werden müssen. Ein einfacher Fall einer derartigen Anpassung liegt z.B. dann vor, wenn ein zusätzlicher Meßgeber in der technischen Anlage installiert worden ist. Das von diesem Meßgeber bereitgestellte zusätzliche Meßsignal muß einerseits der industriellen Steuerungseinheit zugeführt und von deren Steuerungsprogramm verarbeitet werden. Andererseits muß auch der Projektierungsdatensatz einer dazugehörigen industriellen Bedien- und Beobachtungseinheit z.B. so angepaßt werden, daß der zusätzliche Meßwert in ausgewählten Diagrammen angezeigt wird.

Dabei tritt das Problem auf, daß ein Projektierungsdatensatz selbst nach einer nur geringfügigen Anpassung in der Projektierungseinheit erneut vollständig in die dazugehörige Bedien- und Beobachtungseinheit geladen werden muß, um eine Aktivierung der Änderungen zu bewirken. Hierdurch treten erhebliche Verlustzeiten auf. In der Praxis wird eine Projektierungseinheit vielfach über eine serielle Schnittstelle mit einer Bedien- und Beobachtungseinheit verbunden. Beim Laden eines Projektierungsdatensatzes über eine derartige Übertragungsstrecke treten noch größere Zeitverluste auf.

Der Erfindung liegt die Aufgabe zugrunde, ein System anzugeben, womit die für die Übertragung eines Projektierungsdatensatz von einer Projektierungseinheit zu einer Bedien- und Beobachtungseinheit erforderliche Ladezeit reduziert werden.

Diese Aufgabe wird gelöst mit dem in den Ansprüchen angegebenen System. Vorteilhafte weitere Ausgestaltungen der Erfindung sind in den Unteransprüchen enthalten.

Bei dem erfindungsgemäßen System weist einerseits eine Projektierungseinheit erste Mittel auf, die bei einer Änderung eines Projektierungsdatensatzes einen Differenzdatensatz bilden, der über die erste Datenübertragungsstrecke an die Beobachtungs- und Bedieneinheit übertragbar ist, und andererseits eine Beobachtungs- und Bedieneinheit zweite Mittel auf, die einen geladenen Projektierungsdatensatz mit Hilfe eines übertragenen Differenzdatensatz aktualisieren.

Der Vorteil der Erfindung liegt darin, daß ein Projektierungsdatensatz insbesondere im Anschluß an u.U. nur geringfügige Änderungen nicht vollständig an eine Beobachtungs- und Bedieneinheit übertragen werden muß. Die Übertragung eines nur die Änderungen enthaltenden Differenzdatensatzes kann in erheblich kürzerer Zeit erfolgen. Ferner können weitere Zeitvorteile auftreten, wenn auf Seiten der Beobachtungs- und Bedieneinheit nur betroffene Teile Projektierungsdatensatz aktualisiert werden, während eine vollständiger Austausch eines Projektierungsdatensatzes erheblich aufwendiger und in gewisser Weise mit einer Neuinstallation eines Betriebssystems vergleichbar ist.
Die Erfindung und weitere vorteilhafte Ausführungen derselben werden an Hand der in den nachfolgend kurz angegebenen Figuren dargestellten Blockschaltbilder näher erläutert. Dabei zeigt
- Figur 1 :: das Prinzipschaltbild eines gemäß der Erfindung gestalteten Systems, welches sich beispielhaft in einem Off-Line Modus befindet,
- Figur 2 :: das Prinzipschaltbild einer bevorzugten, weiteren Ausführungsform des erfindungsgemäßen Systems,
- Figur 3 :: beispielhafte Ergänzungskomponenten des erfindungsgemäßen Systems zur Ermöglichung eines On-Line Modus,
- Figur 4 :: die Bildung eines Differenzdatensatzes gemäß der vorliegenden Erfindung am Beispiel einer Löschung von Teildaten in einem Projektierungsdatensatz,
- Figur 5 :: die Bildung eines Differenzdatensatzes gemäß der vorliegenden Erfindung am Beispiel einer Einfügung von neuen Teildaten in einen Projektierungsdatensatz,
- Figur 6 :: die Bildung eines Differenzdatensatzes gemäß der vorliegenden Erfindung am Beispiel einer Kopierung und erneuten Einfügung von Teildaten in einen Projektierungsdatensatz, und
- Figur 7 :: die Bildung eines Differenzdatensatzes gemäß der vorliegenden Erfindung am Beispiel einer Ersetzung von Teildaten durch aktualisierte Teildaten in einen Projektierungsdatensatz.

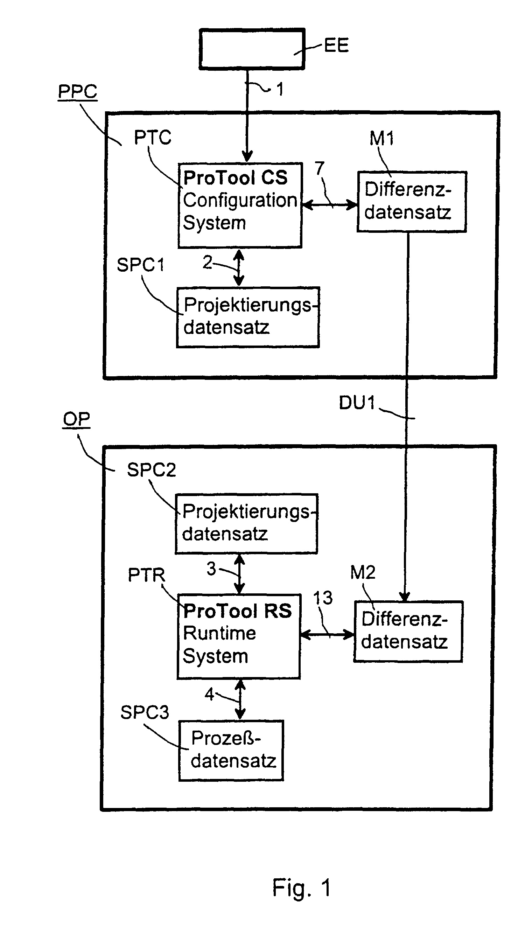

Figur 1 zeigt beispielhaft eine industrielle Beobachtungs- und Bedieneinheit OP. Diese dient zur Anzeige und/oder Vorgabe von Prozeßdaten, welche beispielhaft in einem Speicher SPC3 hinterlegt sind. Die Prozeßdaten können insbesondere in Form von Anzeige- und/oder Stellwerten ein Abbild von realen Prozeßdaten darstellen und von extern in den Speicher SPC3 geladen worden sein. Die Beobachtungs- und/oder Bedieneinheit OP ist im Beispiel der Figur 1 nicht direkt mit dem dazugehören technischen Prozeß verbunden. Die dargestellte Ausführung des erfindungsgemäßen Systems befindet sich somit in einer Art Off-Line Modus.

Die Beobachtungs- und Bedieneinheit OP im Beispiel der Figur 1 wird betrieben von einem Steuerungsprogramm PTR. Dieses verknüpft einen Projektierungsdatensatz, der in einem Speicher SPC2 abgelegt ist, mit aktuellen Prozeßdaten, die im Speicher SPC3 abgelegt sind. Über den Projektierungsdatensatz werden somit z.B. Prozeßabbilder und graphische Anzeigeschemata generiert, welche zur Vervollständigung der Anzeige mit aktuellen Prozeßdaten aus dem Speicher SPC3 gefüllt werden. Bei dem Steuerungsprogramm PTR, welches diese Verknüpfung von Projektierungsdaten und Prozeßdaten vornimmt, kann es sich vorteilhaft um ein Programm handeln, welches auf einer mit "ProTool RS : Run Time System" bezeichneten Software beruhen kann. Die zur unmittelbaren physikalischen Anzeige bzw. Bedienung von Prozeßdaten dienenden Elemente der wie z.B. ein Bildschirm, eine Tastatur, programmierbare Tastenelemente u.v.m., sind aus Gründen der besseren Übersicht in Figur 1 nicht dargestellt. Bei der Beobachtungs- und Bedieneinheit OP kann es sich insbesondere um ein sogenanntes Operator Panel handeln.

Figur 1 zeigt weiterhin beispielhaft eine Projektierungseinheit PPC, welche zur Generierung eines Projektierungsdatensatzes dient, der in einem Speicher SPC1 hinterlegbar ist. Die Projektierungseinheit PPC wird betrieben von einem Projektierungsprogramm PTC, welches z.B. über externe Bedienmittel, z.B. einer über ein Kabel 1 mit der Projektierungseinheit PPC verbundene Tastatur EE, bedienbar ist. Das Projektierungsprogramm PTC ermöglicht eine anwendungsabhängige Generierung von unterschiedlichsten graphischen Objekten, wie z.B. interaktive Prozeßabbilder, Tortendiagramme, u.v.m. Bei dem Projektierungsprogramm PTC kann es sich vorteilhaft um ein Programm handeln, welches auf einer mit "ProTool CS : Configuration System" bezeichneten Software beruhen kann.

Ein fertiger Projektierungsdatensatz ist im Beispiel der Figur 1 über eine erste Übertragungsstrecke DU1 von der Projektierungseinheit PPC in die Beobachtungs- und Bedieneinheit OP ladbar und bewirkt dort zumindest eine Beeinflussung der Anzeige oder der Vorgabemöglichkeiten von Prozeßdaten.

Erfindungsgemäß weist die Projektierungseinheit PPC erste Mittel M1 auf, die bei einer Änderung eines Projektierungsdatensatzes SPC1 einen Differenzdatensatz SPC5 bilden. Dieser ist z.B. automatisch oder manuell gesteuert über die erste Datenübertragungsstrecke DU1 an die Beobachtungs- und Bedieneinheit OP übertragbar. Desweiteren weist die Beobachtungs- und Bedieneinheit OP erfindungsgemäß zweite Mittel M2 auf, die einen geladenen Projektierungsdatensatz SPC2 mit Hilfe eines übertragenen Differenzdatensatz aktualisieren.

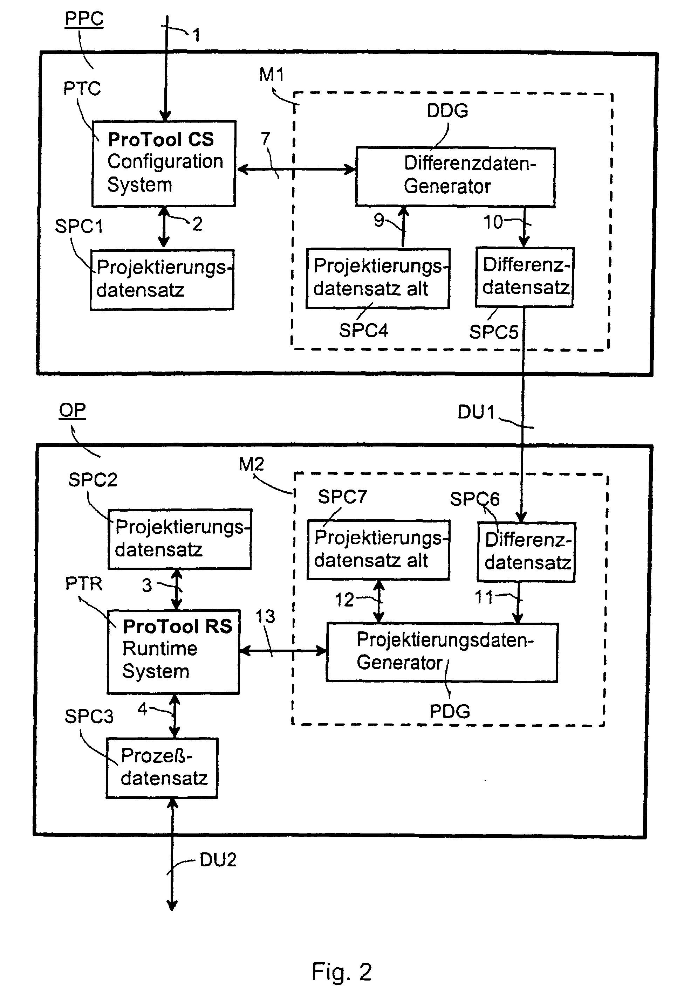

Vorteilhafte Ausführungen der ersten Mittel M1 der Projektierungseinheit PPC und der zweiten Mittel M2 der Beobachtungs- und Bedieneinheit OP des erfindungsgemäßen Systems sind in Figur 2 dargestellt.

Dabei weisen die ersten Mittel M1 einen Differenzdatengenerator DDG auf, der bei einer Änderung des Projektierungsdatensatzes SPC1 einen Differenzdatensatz bildet und in einen Speicher SPC5 hinterlegt. Vorteilhaft wird der Differenzdatengenerator DDG über eine Datenstrecke 7 vom Projektierungsprogramm PTC betrieben, oder ist selbst ein Bestandteil dieses Steuerungsprogrammes PTC. Die Bildung des Differenzdatensatzes erfolgt vorteilhaft durch einen Vergleich des geänderten Projektierungsdatensatzes aus dem Speicher SPC1 mit einer in SPC4 zwischengespeicherten Vorgängerversion des Projektierungsdatensatz, d.h. einem sogenannten alten Projektierungsdatensatz.

Dieser Differenzdatensatz wird über DU1 an die zweiten Mittel M2 in der Beobachtungs- und Bedieneinheit OP übertragen, und dort z.B. in einem Speicher SPC6 hinterlegt. Die zweiten Mittel M2 weisen ferner einen Projektierungsdatengenerator PDG auf, Dieser aktualisiert die z.B. in einem Speicher SPC2 hinterlegte Kopie des Projektierungsdatensatzes der Beobachtungs- und Bedieneinheit OP durch einen Vergleich des übertragenen Differenzdatensatzes aus dem Speicher SPC5 mit einer zwischengespeicherten Vorgängerversion des Projektierungsdatensatz, d.h. einem sogenannten alten Projektierungsdatensatz. Vorteilhaft kann auch hier der Projektierungsdatengenerator PDG softwaremäßig ausgeführt sein und ein Teil des Steuerungsprogrammes PTR darstellen.

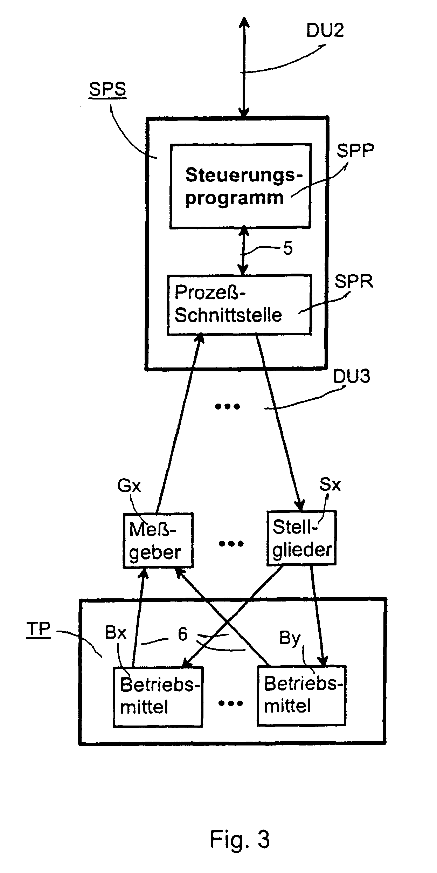

An Hand der Figur 3 werden vorteilhafte Ergänzungskomponenten des erfindungsgemäßen Systems erläutert, welche einen On-Line Modus des Systems ermöglichen. Diese enthalten eine industrielle Steuerungseinheit SPS, die Prozeßdaten einerseits über eine dritte Übertragungsstrecke DU3 mit einem technischen Prozeß TP austauscht und andererseits über eine zweite Übertragungsstrecke DU2 mit der mindestens einen Beobachtungs- und Bedieneinheit OP austauscht.

Der technische Prozeß TR weist eine Vielzahl von technischen Betriebsmitteln Bx, By auf. Dabei kann es sich um regelbare Antriebe, Meßgeber und vieles mehr handeln. Diesen sind einerseits Meßgeber Gx zur Erfassung aktueller Istwerte, wie z.B. Drehzahlen, Temperaturen u.s.w., und Stellglieder Sx zur Ausgabe von Steuerwerten zugeordnet. Hierbei fallen sowohl Ausgabewerte, wie z.B. Stellsignale, als auch Eingabewerte, wie z.B. Meß- und Istwerte, unter den Begriff Prozeßdaten. Von der industriellen Steuerungseinheit SPS werden Prozeßdaten einerseits über eine Prozeßschnittstelle SPR und eine dritte Datenübertragungsstrecke DU3 in Echtzeit im technischen Prozeß in der oben beschriebenen Weise ausgetauscht. Andererseits werden diese Prozeßdaten in einer unter Umständen angepaßten Form z.B. als Anzeige- und Stellwerte über die zweite Datenübertragungsstrecke mit der Beobachtungs- und Bedieneinheit OP ausgetauscht.

Vorteilhaft werten einerseits die ersten Mittel M1 zur Bildung eines Differenzdatensatzes SPC5 Änderungen in einem Projektierungsdatensatz SPC1 in binärer Form aus, und werten andererseits die zweiten Mittel M2 zur Aktualisierung eines Projektierungsdatensatz SPC2 einen übertragenen Differenzdatensatz SPC6 ebenfalls in binärer Form aus. Dies hat den Vorteil, daß sowohl bei der Generierung eines Differenzdatensatzes auf Seiten einer Projektierungseinheit, als auch bei der Aktualisierung eines Projektierungsdatensatzes auf Seiten einer Beobachtungs- und Bedieneinheit keinerlei logische Auswertungen von Dateninhalten erforderlich sind. Vielmehr ist es ausreichend, dabei lediglich mit Teildaten in binärcodierter Form zu operieren.

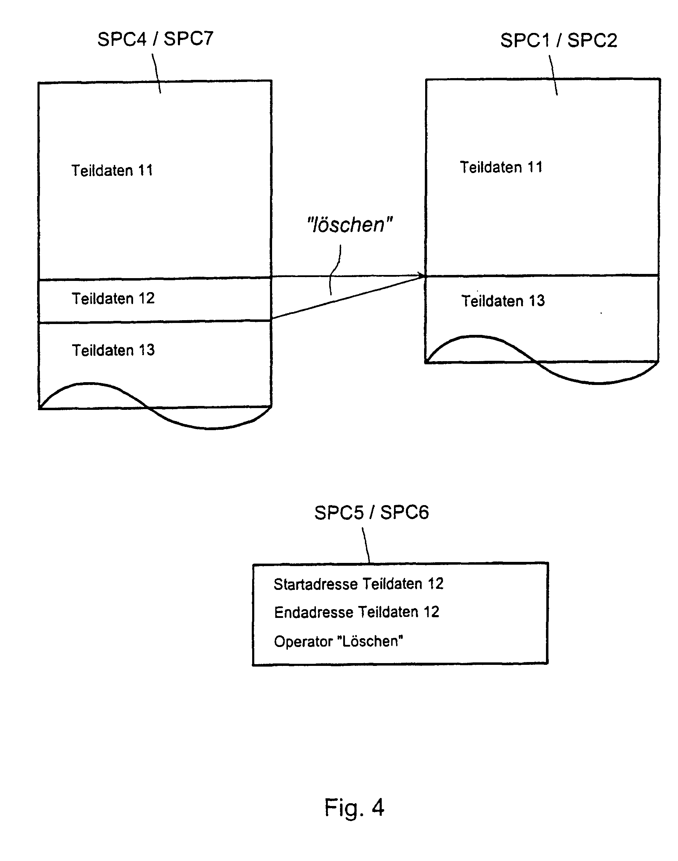

Zur Erleichterung des Zugriffes auf die bei einer Generierung bzw. Aktualisierung zu berücksichtigten Bitkombinationen ist es hierbei vorteilhaft, wenn ein Differenzdatensatz SPC5 bzw. SPC6 zumindest Start- und Endadressen derartiger binärcodierter Teildaten enthält, insbesondere Start- und Endadressen von Speicherbereichen. Dies wird nachfolgend an den in Figuren 4 bis 7 dargestellten Datenbereichen näher erläutert.

Die Figuren 4 bis 7 zeigen jeweils beispielhaft im linken Bereich einen Inhalt der Speicher SPC4 bzw. SPC7, die einen ursprünglichen bzw. alten Projektierungsdatensatz aufweisen, d.h. dessen Zustand vor einer Änderung.

Ferner zeigen die Figuren 4 bis 7 im rechten Bereich einen Inhalt der Speicher SPC1 bzw. SPC2, die einen aktualisierten Projektierungsdatensatz aufweisen, d.h. dessen Zustand nach einer Änderung.

Schließlich zeigen die Figuren 4 bis 7 im unteren Bereich einen Inhalt der Speicher SPC5 bzw. SPC6, die einen Differenzdatensatz aufweisen, d.h. die zur Aktualisierung eines Projektierungsdatensatz erforderlichen Daten.

In der Figur 4 ist die Bildung eines Differenzdatensatzes am Beispiel einer Löschung von Teildaten in einem Projektierungsdatensatz gezeigt.

Der ursprüngliche bzw. alte Projektierungsdatensatz weist dabei die Teildaten 11, 12 und 13 auf. Es sei nun angenommen, daß eine Aktualisierung eine Löschung der Teildaten 12 erforderlich macht. Ein Differenzdatensatz, mit dessen Hilfe der Projektierungsdatengenerator die gewünschte Aktualisierung vornehmen kann, kann dabei vorteilhaft enthalten die Start- und Endadressen der zu löschenden Teildaten 12 und einen, den Löschvorgang kennzeichnenden Operator.

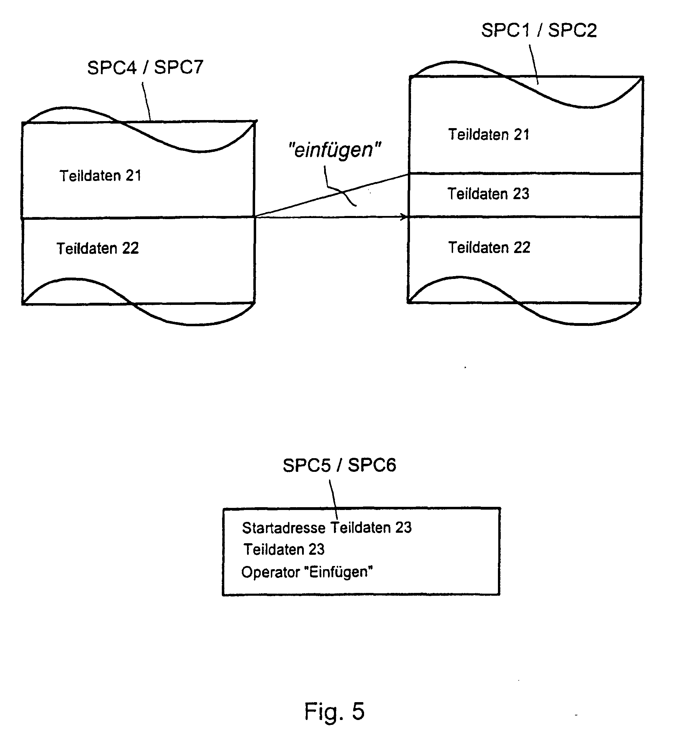

In der Figur 5 ist die Bildung eines Differenzdatensatzes am Beispiel einer Einfügung von neuen Teildaten in einen Projektierungsdatensatz gezeigt.

Der ursprüngliche bzw. alte Projektierungsdatensatz weist dabei die Teildaten 21 und 22 auf. Es sei nun angenommen, daß eine Aktualisierung eine Einfügung von neuen Teildaten 23 erforderlich macht. Ein Differenzdatensatz, mit dessen Hilfe der Projektierungsdatengenerator die gewünschte Aktualisierung vornehmen kann, kann dabei vorteilhaft enthalten die Startadressen der einzufügenden Teildaten 23, d.h. die Einfügeadresse, die neuen Teildaten 23 selbst und einen, den Einfügevorgang kennzeichnenden Operator.

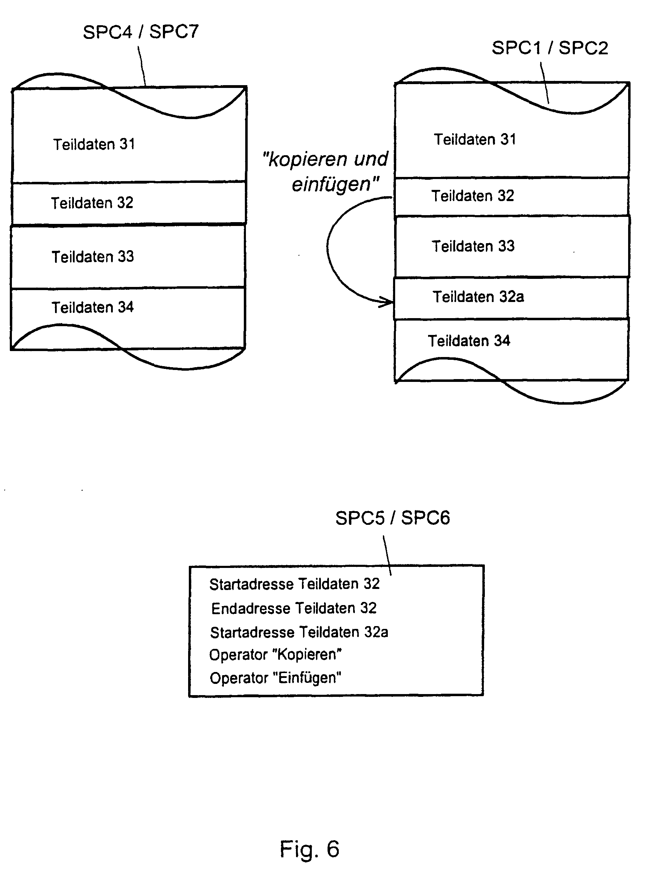

In der Figur 6 ist die Bildung eines Differenzdatensatzes am Beispiel einer Kopierung und erneuten Einfügung von Teildaten in einen Projektierungsdatensatz gezeigt.

Der ursprüngliche bzw. alte Projektierungsdatensatz weist dabei die Teildaten 31, 32, 33, 34 auf. Es sei nun angenommen, daß eine Aktualisierung eine erneute Einfügung der bereits vorhandenen Teildaten 32 in den Projektierungsdatensatz erforderlich macht. Ein Differenzdatensatz, mit dessen Hilfe der Projektierungsdatengenerator die gewünschte Aktualisierung vornehmen kann, kann dabei vorteilhaft enthalten die Start- und Endadressen der zu kopierenden Teildaten 32, die Startadressen der einzufügenden Teildaten 32a, d.h. die Einfügeadresse, und Operatoren, welche die Kopierung der Teildaten 32, und deren erneute Einfügung in Form der Teildaten 32a kennzeichnen.

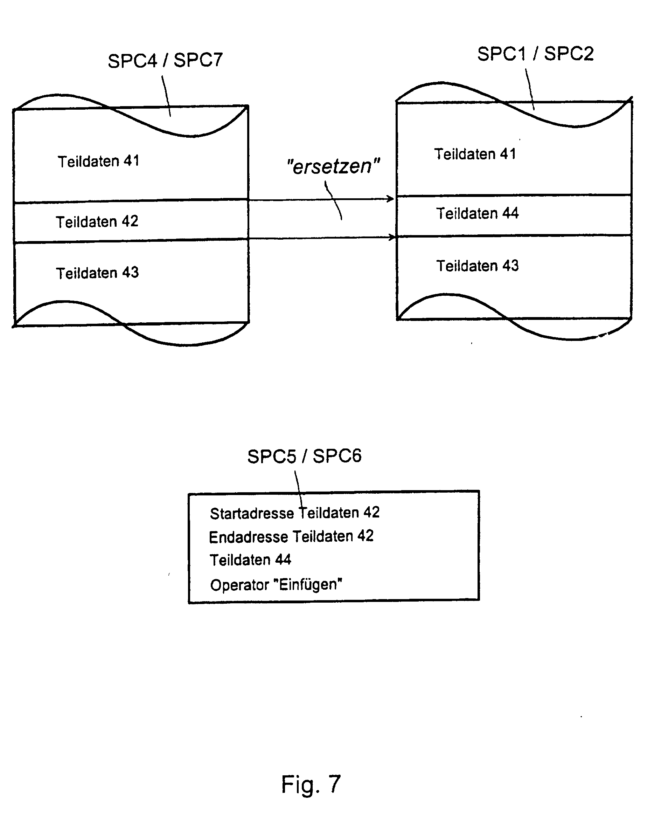

In der Figur 7 ist schließlich die Bildung eines Differenzdatensatzes am Beispiel einer Ersetzung von Teildaten durch aktualisierte Teildaten in einen Projektierungsdatensatz gezeigt.

Der ursprüngliche bzw. alte Projektierungsdatensatz weist dabei die Teildaten 41, 42, 43 auf. Es sei nun angenommen, daß eine Aktualisierung einen Austausch der Teildaten 42 durch neue Teildaten 44 erforderlich macht. Ein Differenzdatensatz, mit dessen Hilfe der Projektierungsdatengenerator die gewünschte Aktualisierung vornehmen kann, kann dabei vorteilhaft enthalten die Start- und Endadresse der betroffenen Teildaten 42, die neuen Teildaten 44 selbst und einen, den Einfügevorgang kennzeichnenden Operator.

## Patentansprüche

1. System zur Visualisierung von technischen Prozeßdaten, mit
a) einer ersten Übertragungsstrecke für Daten (DU1),
b) einer industriellen Beobachtungs- und Bedieneinheit (OP) zur Anzeige oder Vorgabe von Prozeßdaten (SPC3),
c) einer Projektierungseinheit (PPC), mit
c1) Mitteln zur Generierung eines Projektierungsdatensatzes (SPC1), der über die erste Übertragungsstrecke (DU1) in die Beobachtungs- und Bedieneinheit (OP) zur Beeinflussung der Anzeige oder der Vorgabe von Prozeßdaten (SPC3) ladbar ist, und mit
c2) ersten Mitteln (M1), die bei einer Änderung eines Projektierungsdatensatzes (SPC1) einen Differenzdatensatz (SPC5) bilden, der über die erste Datenübertragungsstrecke (DU1) an die Beobachtungs- und Bedieneinheit (OP) übertragbar ist, und wobei
d) die Beobachtungs- und Bedieneinheit (OP) zweite Mittel (M2) aufweist, die einen geladenen Projektierungsdatensatz (SPC2) mit Hilfe eines übertragenen Differenzdatensatz (SPC6) aktualisieren. (Figur 1)

2. System nach Anspruch 1, mit einem Operator Panel als industrielle Beobachtungs- und Bedieneinheit (OP) zur Anzeige und/oder Vorgabe von Prozeßdaten (SPC3).

3. System nach Anspruch 1, wobei die ersten Mittel (M1) der Projektierungseinheit (PPC) einen Differenzdatengenerator (DDG) aufweisen, der bei einer Änderung des Projektierungsdatensatzes (SPC1) den Differenzdatensatz (SPC5) bildet durch einen Vergleich mit einem gespeicherten Projektierungsdatensatz (SPC4). (Figur 2)

4. System nach Anspruch 3, wobei die Projektierungseinheit (PPC) ein Steuerungsprogramm (PTC) aufweist (ProToolCS) und der Differenzdatengenerator (DDG) ein Teil des Steuerungsprogrammes (PTC) ist.

5. System nach einem der vorangegangenen Ansprüche, wobei die zweiten Mittel (M2) der Beobachtungs- und Bedieneinheit (OP) einen Projektierungsdatengenerator (PDG) aufweisen, der den Projektierungsdatensatz (SPC2) aktualisiert durch einen Vergleich eines übertragenen Differenzdatensatzes (SPC5) mit einem gespeicherten Projektierungsdatensatz (SPC7). (Figur 2)

6. System nach Anspruch 5, wobei die Beobachtungs- und Bedieneinheit (OP) ein Steuerungsprogramm (PTR) aufweist (Pro-ToolRS) und der Projektierungsdatengenerator (PDG) ein Teil des Steuerungsprogrammes (PTR) ist.

7. System nach einem der vorangegangenen Ansprüche, mit
a) einer zweiten und dritten Übertragungsstrecke für Daten (DU2,DU3), und
b) einer industriellen Steuerungseinheit (SPS), die über
b1) die dritte Übertragungsstrecke (DU3) Prozeßdaten (Gx,Sx) mit einem technischen Prozeß (TP) austauscht, und über
b2) die zweite Übertragungsstrecke (DU2) Prozeßdaten (SPC3) mit der mindestens einen Beobachtungs- und Bedieneinheit (OP) austauscht (SPR). (Figur 3)

8. System nach einem der vorangegangenen Ansprüche, wobei die ersten Mittel (M1) zur Bildung eines Differenzdatensatzes (SPC5) Änderungen in einem Projektierungsdatensatz (SPC1) in binärer Form auswerten.

9. System nach einem der vorangegangenen Ansprüche, wobei die zweiten Mittel (M2) zur Aktualisierung eines Projektierungsdatensatz (SPC2) einen übertragenen Differenzdatensatz (SPC6) in binärer Form auswerten.

10. System nach einem der vorangegangenen Ansprüche, wobei ein Differenzdatensatz (SPC5) zumindest binäre Start- und Endadressen enthält, insbesondere von Speicherbereichen. (Figuren 4 bis 7)

11. System nach einem der vorangegangenen Ansprüche, wobei ein Differenzdatensatz (SPC5) zumindest Teildaten in binärcodierter Form enthält. ( Figur 5,7 )

## Claims

1. System for the visualisation of technical process data, having:
a) a first transmission link for data (DU1),
b) an industrial observation/operator's unit (OP) for displaying or specifying process data (SPC3),
c) a projection unit (PPC), having
c1) means for generating a projection data record (SPC1) which can be loaded via the first transmission link (DU1) into the observation/operator's unit (OP) to influence the display or the specification of process data (SPC3), and having
c2) first means (M1) which form a differential data record (SPC5) when a projection data record (SPC1) is modified, and said differential data record can be transmitted to the observation/operator's unit (OP) via the first data transmission link (DU1), and whereby
d) the observation/operator's unit (OP) has second means (M2) which update a loaded projection data record (SPC2) with the aid of a transmitted differential data record (SPC6). (Figure 1)

2. System according to Claim 1, wherein the industrial observation/operator's unit (OP) for displaying and/or specifying process data (SPC3) comprises an operator panel.

3. System according to Claim 1, wherein the first means (M1) of the projection unit (PPC) comprise a differential data generator (DDG) which, when the projection data record (SPC1) is modified, forms the differential data record (SPC5) by a comparison with a stored projection data record (SPC4). (Figure 2)

4. System according to Claim 3, wherein the projection unit (PPC) comprises a control program (PTC) (ProToolCS), and the differential data generator (DDG) is a part of the control program (PTC).

5. System according to one of the preceding claims, wherein the second means (M2) of the observation/operator's unit (OP) comprise a projection data generator (PDG) which updates the projection data record (SPC2) by comparing a transmitted differential data record (SPC5) with a stored projection data record (SPC7). (Figure 2)

6. System according to Claim 5, wherein the observation/operator's unit (OP) comprises a control program (PTR) (proToolRS), and the projection data generator (PDG) is a part of the control program (PTR).

7. System according to one of the preceding claims, having
a) a second and third transmission link for data (DU2, DU3), and
b) an industrial control unit (SPS) which
b1) exchanges process data (Gx, Sx) with a technical process (TP) via the third transmission link (DU3), and
b2) exchanges process data (SPC3) with at least one observation/operator's unit (OP) via the second transmission link (DU2) (SPR). (Figure 3)

8. System according to one of the preceding claims, wherein the first means (M1) for forming a differential data record (SPC5) evaluate modifications to a projection data record (SPC1) in binary form.

9. System according to one of the preceding claims, wherein the second means (M2) for updating a projection data record (SPC2) evaluate a transmitted differential data record (SPC6) in binary form.

10. System according to one of the preceding claims, wherein a differential data record (SPC5) contains at least binary starting and ending addresses, especially of memory areas. (Figures 4 to 7)

11. System according to one of the preceding claims, wherein a differential data record (SPC5) contains at least partial data in binary-coded form. (Figure 5, 7)

## Revendications

1. Système de visualisation de données de processus technique, comportant
a) une première voie de transmission (DU1) pour des données,
b) une unité de commande et d'observation industrielle (OP) pour afficher ou prescrire des données de processus (SPC3),
c) une unité de développement (PPC), comportant
c1) des moyens pour produire un ensemble de données de développement (SPC1) qui peut être chargé par l'intermédiaire de la première voie de transmission (DU1) dans l'unité de commande et d'observation (OP) afin d'influencer l'affichage ou la prescription de données de processus (SPC3), et
c2) des premiers moyens (M1) qui forment lors d'une modification d'un ensemble de données de développement (SPC1) un ensemble de données différentielles (SPC5) qui peut être transmis par l'intermédiaire de la première voie de transmission (DU1) à l'unité de commande et d'observation (OP),
d) l'unité de commande et d'observation (OP) comportant des deuxièmes moyens (M2) qui actualisent un ensemble de données de développement chargé (SPC2) à l'aide d'un ensemble de données différentielles transmis (SPC6). (Figure 1)

2. Système selon la revendication 1, comportant une console d'opérateur comme unité de commande et d'observation industrielle (OP) pour afficher et/ou prescrire des données de processus (SPC3).

3. Système selon la revendication 1, dans lequel les premiers moyens (M1) de l'unité de développement (PPC) comportent un générateur de données différentielles (DDG) qui forme l'ensemble de données différentielles (SPC5) lors d'une modification de l'ensemble de données de développement (SPC1) au moyen d'une comparaison avec un ensemble de données de développement mémorisé (SPC4). (Figure 2)

4. Système selon la revendication 3, dans lequel l'unité de développement (PPC) comporte un programme de commande (PTC) (ProTooICS) et le générateur de données différentielles (DDG) est une partie du programme de commande (PTC).

5. Système selon l'une des revendications précédentes, dans lequel les deuxièmes moyens (M2) de l'unité de commande et d'observation (OP) comportent un générateur de données de développement (PDG) qui actualise l'ensemble de données de développement (SPC2) au moyen d'une comparaison entre un ensemble de données différentielles transmis (SPC5) et un ensemble de données de développement mémorisé (SPC7). (Figure 2)

6. Système selon la revendication 5, dans lequel l'unité de commande et d'observation (OP) comporte un programme de commande (PTR) (ProTooIRS) et le générateur de données de développement (PDG) est une partie du programme de commande (PTR).

7. Système selon l'une des revendications précédentes, comportant
a) une deuxième et une troisième voie de transmission (DU2, DU3) pour des données, et
b) une unité de commande industrielle (SPS)
b1) qui échange des données de processus (Gx, Sx) avec un processus technique (TP) par l'intermédiaire de la troisième voie de transmission (DU3), et
b2) qui échange (SPR) des données de processus (SPC3) avec la ou les unités de commande et d'observation (OP) par l'intermédiaire de la deuxième voie de transmission (DU2). (Figure 3)

8. Système selon l'une des revendications précédentes, dans lequel les premiers moyens (M1) destinés à la formation d'un ensemble de données différentielles (SPC5) évaluent sous forme binaire des modifications dans un ensemble de données de développement (SPC1).

9. Système selon l'une des revendications précédentes, dans lequel les deuxièmes moyens (M2) destinés à l'actualisation d'un ensemble de données de développement (SPC2) évaluent sous forme binaire un ensemble de données différentielles transmis (SPC6).

10. Système selon l'une des revendications précédentes, dans lequel un ensemble de données différentielles (SPC5) contient au moins des adresses de début et de fin binaires, notamment de zones de mémoire. (Figures 4 à 7)

11. Système selon l'une des revendications précédentes, dans lequel un ensemble de données différentielles (SPC5) contient au moins des données partielles sous une forme codée binaire. (Figures 5, 7)
